# EUROPÄISCHE PATENTSCHRIFT

(11) **EP 0 533 864 B1**
(45) Veröffentlichungstag und Bekanntmachung des Hinweises auf die Patenterteilung: **28.06.1995**
(21) Anmeldenummer: 92905991.3
(22) Anmeldetag: 07.03.1992
(51) Int. Cl.: B01D 45/10, B01D 46/12, B01D 50/00

(54) **FILTER**
FILTER
FILTRE

(30) Priorität: 13.03.1991 DE 9102970 U
(43) Veröffentlichungstag der Anmeldung: 31.03.1993
(73) Patentinhaber: KALTHOFF LUFTFILTER UND FILTERMEDIEN GmbH, D-59379 Selm (DE)
(72) Erfinder: WERNER, Udo, W-4350 Recklinghausen (DE); BADT, Henrik, D-4717 Selm (DE); COERMANN, Olaf, D-2000 Hamburg 13 (DE)
(74) Vertreter: Schmidt-Bogatzky, Jürgen, Dr. Ing.
(86) Internationale Anmeldenummer: EP9200507
(87) Internationale Veröffentlichungsnummer: WO9216281

(56) Entgegenhaltungen:
- EP-A- 0 353 679
- DE-C- 173 705
- DE-C- 244 548
- DE-C- 3 609 151
- FR-A- 339 841

## Beschreibung

Die Erfindung betrifft einen Filter mit einem Filtermedium zur Rückhaltung von festen Partikeln aus Gasen, das mit einem Benetzungsmittel versehen werden kann und zusätzlich über die Ebene des Filtermediums verteilt rasterartig angeordnete Durchbrechungen aufweist, bei dem mindestens zwei Lagen des Filtermediums mittels Abstandshaltern im Abstand und allgemein parallel zueinander so ausgerichtet sich über die Anströmfläche des zu reinigenden Gases erstrecken, daß deren Durchbrechungen versetzt zueinander angeordnet sind.

Ein Filtermedium dieser Art ist z. B. durch die DE-C-36 37 428 bekannt. Dieses Filter besteht aus offenporigem Schaumstoff, der mit Glyzerin getränkt ist. Der Schaumstoff ist mit Bohrungen für den Luftdurchlaß versehen und auf einer Kunststoffträgerplatte aufgebracht, die ebenso mit Bohrungen für den Luftdurchlaß versehen ist. Es können mehrere Filterschichten so angeordnet werden, daß die Bohrungen der einen Schicht gegenüber den Bohrungen der benachbarten Schicht versetzt sind. Bei diesem Prallplattenfilter besteht der Nachteil, daß lediglich grobe, der trägheitsbedingten Abscheidung unterliegende Staubpartikel abgetrennt werden können. Feine Staubpartikel können nicht abgetrennt werden. Weiterhin besteht der Nachteil, daß mit zunehmender Staubeinlagerung ein überproportionaler Anstieg des Druckverlustes eintritt. Ein weiterer Nachteil besteht darin, daß bereits nach relativ kurzer Bestaubungszeit der maximale Trenngrad absinkt, da die Wirkung des Benetzungsmittels mit wachsender Bestaubungszeit nachläßt. Da das Schaumstoffmaterial selbst keine Trennwirkung hat und die Abscheidung nur über das Benetzungsmittel erfolgt, haben diese Filter ein verhältnismäßig großes Bauvolumen. Dieses ist ein weiterer Nachteil, da der Einbau in engen Motorräumen von Kraftfahrzeugen erschwert ist.

Es sind auch Luftfilter bekannt, bei denen als Filtermedium mehrlagiger Vliesstoff verwendet wird. Ein derartiges Filter kann z. B. aus einer Lage Trägervliesstoff und einer Lage Abdeckvliesstoff bestehen, wobei zwischen diesen Lagen eine dritte Vliesstoffschicht aus Elektretfasern angeordnet ist. Diese Elektretfasern sind permanent elektrostatisch aufgeladene Materialien, die die eigentliche Abscheidung übernehmen. Bei diesen Filtern besteht der Nachteil, daß sich die Faserladung mit zunehmender Bestaubungszeit sowie unter bestimmten Betriebsbedingungen abbaut und dadurch das Abscheideverhalten verschlechtert wird. Infolge von Staubeinlagerung steigt der Druckverlust stark an. Dadurch haben diese Filter eine nur sehr begrenzte Standzeit.Durch vollständiges Zusetzen infolge von Staubeinlagerung kann sogar der Luftdurchtritt durch das Filtermedium völlig verhindert werden. Diese Eigenschaft wird sämtlichen Vliesstoffiltern, die keine Durchbrechungen aufweisen, unabhängig vom Vliesstoffmaterial zugeschrieben. Beim Einsatz des Filtermaterials für die Fahrzeuginnenraumbelüftung ist somit die Versorgung der Fahrzeuginsassen mit Frischluft nicht für jeden Betriebszeitpunkt gegeben. Die elektrostatische Aufladung kann beim Einsatz der Filter in Kraftfahrzeugen außerdem unter Umständen Störungen der Fahrzeugelektronik bewirken.

Die Aufgabe der Erfindung besteht darin, einen Filter der eingangs genannten Art so auszubilden, daß bei einem Einsatz bei kleinem Bauvolumen über eine große Bestaubungszeit ein hoher Abscheidegrad gewährleistet ist, wobei bei großer Staubablagerung und hierdurch bedingtem zunehmendem Strömungswiderstand des Filtermediums eine weiter ausreichende Durchströmung des Filters mit dem Gas gewährleistet sein soll.

Erfindungsgemäß erfolgt die Lösung der Aufgabe dadurch, daß der Strömungswiderstand der Lagen des Filtermediums des Filters zu Beginn der Abscheidephase kleiner oder gleich dem Durchströmungswiderstand der Durchbrechungen ist und daß im Laufe der Abscheidephase der Strömungswiderstand des Filtermediums in Folge Staubeinlagerungen stetig gegenüber dem Durchströmungswiderstand der Durchbrechungen zunimmt, so daß das allgemein poröse Filter anfänglich als Oberflächen- oder Tiefenfilter und im Laufe der Abscheidephase in zunehmendem Maße als Umlenkabscheider wirkt. Vorteilhafte Ausgestaltungen der Erfindung werden in den abhängigen Ansprüchen beschrieben.

Nach der Erfindung werden in vorteilhafter Weise die Eigenschaften eines Tiefenfilters mit denen eines Plattenfilters kombiniert. Durch die Ausbildung des Filtermediums strömt das zu reinigende Gas zunächst durch das Filtermedium. Wenn dieses mit abzulagernden Stäuben gesättigt ist, steigt der Strömungswiderstand so stark an, daß der Gasstrom infolge einer Umlenkung durch die Durchbrechungen in den Lagen des Filtermediums strömt. Da die Durchbrechungen versetzt zueinander angeordnet sind, prallen die durch eine Durchbrechung austretenden Staubpartikel auf die folgende Lage Filtermediums. Die Staubpartikel werden hierbei abgebremst und aus dem Gasstrom ausgeschieden. Dieser strömt etwa parallel zu dieser Lage des Filtermediums, bis er durch eine weitere Durchbrechung dieser Lage strömen kann. Bei dem erfindungsgemäßen Filter wird somit die Partikelaufnahmekapazität gegenüber bekannten Filtern vergrößert bei gleichzeitigem Vermeiden eines Zusetzen des Filtersystems. Es besteht keine Gefahr, einer Unterbrechung des Gasstroms. Der Verlauf des Druckverlustes während der Beladung mit Partikeln erreicht nur einen bestimmten maximalen Wert, der durch die Geometrie und die Anordnung der Durchbrechungen gegeben ist. Das erfindungsgemäße Filter kann hinsichtlich Standzeit, Filterleistung und Druckverlust im Hinblick auf das zu reinigende Gasmedium verhältnismäßig einfach optimiert werden. Das Filter kann taschenförmig ausgebildet sein und eine ebene oder gewellte Oberfläche haben. Es ist auch möglich, das Filter bahnenförmig herzustellen, wobei die für das jeweilige Filter erforderlichen Zuschnitte dann individuell abgetrennt werden können.

Zur Modifizierung des Filtermediums kann dieses mit einem Benetzungsmittel wie Siliconöl od. dgl. getränkt werden. Diese Benetzungsmittel können fungizid oder antibakteriell wirkende Zusätze enthalten.

Das Filtermedium kann abhängig von den Einsatzbedingungen aus den verschiedensten textilen Faserstoffen bestehen. So können natürliche, pflanzliche oder tierische Fasern, chemische Fasern aus natürlichen oder synthetischen Polymeren, industriell hergestellte Fasern aus Glas, Gestein, Metallen od. dgl. oder auch Mischungen solcher Fasern zum Einsatz kommen. Hierzu können die Fasern orientiert, wirr oder gekreuzt angeordnet werden und zu Faservliesen und Vliesstoffen, Watten, Filzen, Gewirken, Geweben, Geflechten od. dgl. verbunden sein. Es ist auch möglich, Vliese mit elektrostatischer Aufladung zu verwenden. Ferner kann das Filtermedium auch aus festen Schäumen oder anderen porösen Werkstoffen wie Sintermaterialien u. dgl. bestehen. Durch entsprechende Wahl des Filtermediums kann das erfindungsgemäße Filtermedium regenerierbar ausgebildet sein.

Die Erfindung wird nachstehend anhand des in den Zeichnungen schematisch dargestellten erfindungsgemäßen Filtermediums näher erläutert. Es zeigt
- Fig. 1: einen Ausschnitt eines aus drei Lagen eines Fil termediums bestehenden Filters in einer Draufsicht im Schnitt,
- Fig. 2a bis 2e: eine Lage des Filtermediums mit verschiedenen möglichen Längs- und Querschnittsgestaltungen der Durchbrechungen in einer Queransicht im Schnitt,
- Fig. 3: eine Filterplatte aus drei Lagen eines Filtermediums in einer Seitenansicht im Schnitt,
- Fig. 4: eine Anordnung von Filterplatten nach Fig. 3 in einem Filtergehäuse in einer schematischen Seitenansicht im Schnitt.

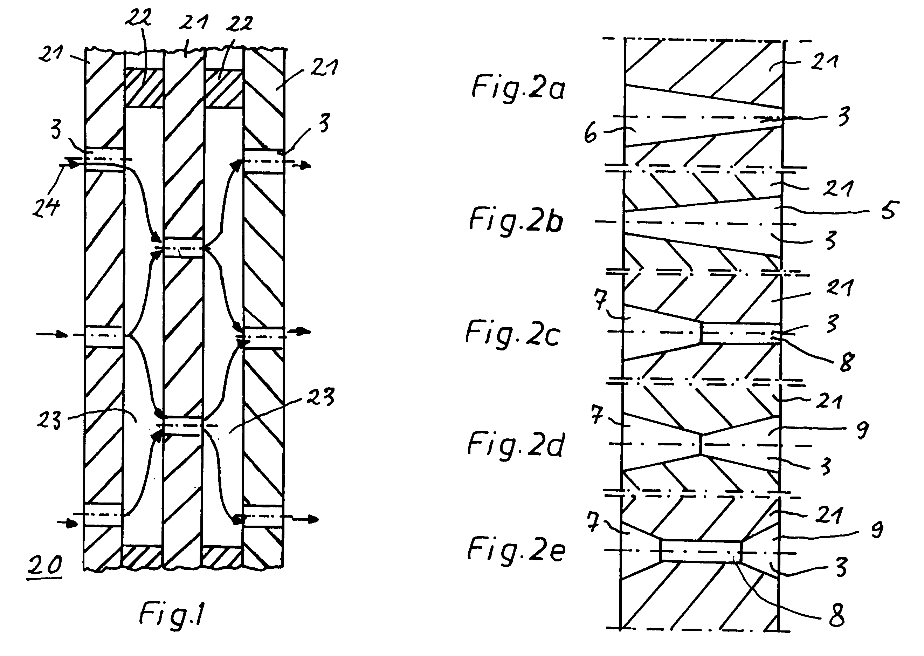

Fig. 1 zeigt eine Filteranordnung 20, das aus drei Lagen 21 z. B. gewirkten Filtermediums besteht. Zwischen den Lagen 21 sind Abstandshalter 22 vorgesehen, durch die ein von Gas durchströmbarer Hohlraum 23 gebildet wird. Die Abstandshalter 22 können als mit den Lagen 21 verbundene textile Filtermaterialverdickungen ausgebildet sein. Es ist aber auch möglich, als Abstandhalter 22 einen Kunststoffkleber zu verwenden. Als Abstandshalter kann auch ein zwischen den Lagen 21 einzubringendes nicht zusetzendes offenporiges Material verwendet werden. Diese kann z. B. ein offenporiger fester Schaum sein. Dieses Material kann den Hohlraum zwischen zwei Lagen 21 ganz oder auch nur teilweise ausfüllen. Die drei Lagen 21 können zu einem flexiblen oder formsteifen Filteranordnung ausgebildet werden. Es ist auch möglich, aus den drei Lagen 21 eine taschenförmige Filteranordnung zu bilden. Entscheidend ist, daS bei einem Durchtreten des Gasstroms 24 durch die Durchbrechungen 3 in die Hohlräume 23 der Gasstrom 24 an der jeweils folgenden Lage 21 umgelenkt wird und hierbei eine Abbremsung der mitgeführten Staubfracht erfolgt.

In den Fig. 2a bis 2e sind als Beispiel mögliche Ausgestaltungen der Durchbrechungen 3 dargestellt, für die die Lagen 21 gewirkten Filtermediums vorteilhaft zu dünnen formsteifen Platten 4 ausgebildet werden können. Auch wird die Formgebung der Durchbrechungen 3 so gewählt, daß der Strömungswiderstand der Durchbrechungen 3 über die Abscheidestandzeit der Lagen 21 bzw. Platten 4 größer ist als der der Lagen 21 bzw. Platten 4. Es ist möglich, die Durchbrechungen 3 als Düsen 6 auszubilden (Fig. 2a). Sofern abströmseitig an der Platte 4 ein Druckaufbau gewünscht wird, ist es zweckmäßig, die Durchbrechungen 3 als Diffusoren 5 auszubilden (Fig. 2b). Es kann aber auch lediglich der Einströmabschnitt 7 der Durchbrechungen 3 düsenförmig ausgebildet sein, wobei sich an den Einströmabschnitt 7 ein zylindrischer Abschnitt 8 der Durchbrechung 3 (Fig. 2c) oder ein diffusorartiger Abschnitt 9 der Durchbrechung 3 (Fig. 2d) anschließen kann. In besonderen Fällen kann es auch von Vorteil sein, den mittigen Abschnitt der Durchbrechung als zylindrischen Abschnitt 8 auszubilden, der mit einem düsenförmigen Einströmabschnitt 7 und einem diffusorartigen Abschnitt 9 verbunden ist (Fig. 2e). Die Durchbrechungen 3 können einen runden oder eckigen Querschnitt haben, der z. B. kreisrund, oval, quadratisch, rechteckig oder vieleckig sein kann.

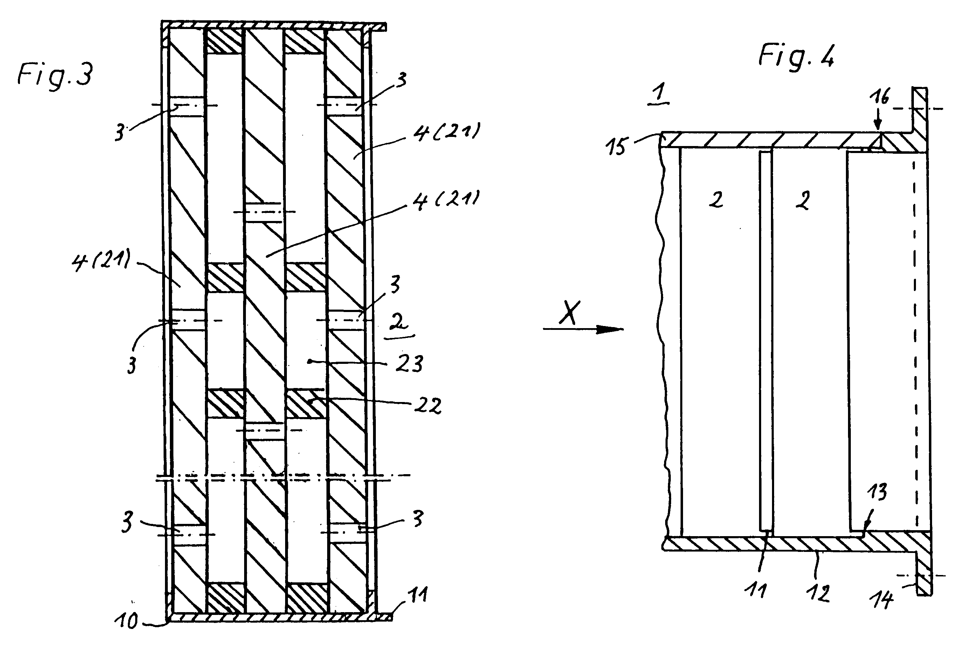

Fig. 3 zeigt eine aus Lagen 21 bzw. formsteifen Platten 4 eines gewirktem Filtermediums gebildete Filterplatte 2, die z. B. für einen Filter 1 gemäß Fig. 4 bestimmt sein kann. Das Filtermedium kann mit einem Benetzungsmittel wie Siliconöl getränkt sein und ggf. auch fungizid, antibakteriell oder ähnlich modifiziert sein. Außenseitig sind die Lagen 21 bzw. Platten 4 der Filterplatte 2 in einem Rahmen 10 gehalten, an dem Abstandshalter 11 ausgebildet sind. Die Abstandshalter 11 sind parallel zur Durchströmrichtung X ausgerichtet. Durch den Rahmen 10 werden die Lagen 21 bzw. Platten 4 gegen eine Verformung durch den Gasstrom geschützt.

Vorzugsweise sind die Filterplatten 2 so ausgebildet, daS sie als Einschubteile lösbar in ein Filtergehäuse 12 eingesetzt werden können (Fig. 4). Hierzu muß in dem Filtergehäuse 12 eine Durchbrechung 16 ausgebildet sein, die mit einem Gehäusedeckel 15 verschließbar ist. Durch die Durchbrechung 16 können die Filterplatten 2 geführt werden. Hierbei liegt die eine Filterplatte 2 an einem Anschlag 13 des Filtergehäuses 12 an, während die weiteren Filterplatten 2 mit ihren Abstandshaltern 11 jeweils an dem Rahmen 10 der abströmseitig benachbarten Filterplatte 2 anliegen. Die Befestigung des Filtergehäuses 12 z. B.in der Zuluftanlage eines Kraftfahrzeugs kann mittels eines Flansches 14 erfolgen.

## Patentansprüche

1. Filter mit einem flächigen Filtermedium zur Rückhaltung von festen Partikeln aus Gasen, das mit einem Benetzungsmittel versehen werden kann und zusätzlich über die Ebene des Filtermediums verteilt rasterartig angeordnete Durchbrechungen aufweist, bei dem mindestens zwei Lagen (21) des Filtermediums mittels Abstandshaltern (22) im Abstand und allgemein parallel zueinander so ausgerichtet sich über die Anströmfläche des zu reinigenden Gases erstrecken, daß deren Durchbrechungen (3) versetzt zueinander angeordnet sind, dadurch gekennzeichnet, daß die Durchbrechungen (3) mit einer derartigen Formgebung ausgebildet sind, daß der Durchströmungswiderstand der Lagen (21) des Filtermediums des Filters zu Beginn der Abscheidephase kleiner oder gleich dem Durchströmungswiderstand der Durchbrechungen (3) ist und daß im Laufe der Abscheidephase der Durchströmungswiderstand des Filtermediums in Folge Staubeinlagerungen stetig gegenüber dem Durchströmungswiderstand der Durchbrechungen (3) zunimmt, so daß das allgemein poröse Filtermedium anfänglich als Oberflächen- oder Tiefenfilter und im Laufe der Abscheidephase in zunehmendem Maße als Umlenkabscheider wirkt.

2. Filter nach Anspruch 1, dadurch gekennzeichnet, daß die Abstandshalter (22) aus Verdickungen des gewirkten Filtermediums gebildet sind.

3. Filter nach Anspruch 1, dadurch gekennzeichnet, daß die Abstandshalter (22) aus Materialverdickungen aus Kunststoff bestehen.

4. Filter nach Anspruch 1, dadurch gekennzeichnet, daß zwischen den Lagen (21) des Filtermediums ein den Hohlraum (23) zwischen den Lagen (21) ganz oder teilweise ausfüllendes nicht zusetzendes offenporiges Material als Abstandshalter eingebracht ist.

5. Filter nach Anspruch 2 bis 4, dadurch gekennzeichnet, daß die Abstandshalter (22) die jeweils anliegenden Lagen (21) miteinander verbinden.

6. Filter nach Anspruch 1 bis 5, dadurch gekennzeichnet, daß die Lagen(21) des Filtermediums mit einem die Filterleistungen verbessernden Benetzungsmittel wie Siliconöl od. dgl. getränkt sind.

7. Filter nach Anspruch 1 bis 6, dadurch gekennzeichnet,daß die Lagen (21) des Filtermediums mit einem antibakteriellem und/oder fungizidem Modifikationsmittel versehen sind.

8. Filter nach Anspruch 1 bis 7, dadurch gekennzeichnet, daß mindestens eine Lage (21) des Filtermediums elektrostatisch aufgeladen ist.

9. Filter nach Anspruch 1 bis 8, dadurch gekennzeichnet, daß das Filtermedium aus pflanzlichen oder tierischen Fasern oder natürlichen Polymerfasern oder synthetischen Polymerfasern oder anorganische Fasern oder aus einer Mischung dieser Fasern besteht.

10. Filter nach Anspruch 9, dadurch gekennzeichnet, daß die Fasern als Vlies, Vliesstoff, Papier, Filz oder Geflecht ausgebildet sind.

11. Filter nach Anspruch 9 und 10, dadurch gekennzeichnet, daß die Fasern zu Vliesverbundschichten gewirkt sind.

12. Filter nach Anspruch 1 bis 8, dadurch gekennzeichnet, daß das Filtermedium aus porösem Werkstoff wie Schaum, Sintermaterial od. dgl. besteht.

13. Filter nach Anspruch 1, dadurch gekennzeichnet, daß die Durchbrechungen (3) einen diffusorartigen Querschnitt (5) haben.

14. Filter nach Anspruch 1, dadurch gekennzeichnet, daß der Einströmabschnitt (7) der Durchbrechungen (3) düsenförmig ausgebildet ist.

15. Filter nach Anspruch 1, dadurch gekennzeichnet, daß die Durchbrechungen (3) düsenförmig (6) ausgebildet sind.

16. Filter nach Anspruch 15, dadurch gekennzeichnet, daß sich an den düsenförmigen Einströmabschnitt (7) ein zylindrischer Abschnitt (8) der Durchbrechung (3) anschließt.

17. Filter nach Anspruch 15, dadurch gekennzeichnet, daß sich an den düsenförmigen Einströmabschnitt (7) ein diffusorartiger Abschnitt (9) der Durchbrechung (3) anschließt.

18. Filter nach Anspruch 14 bis 17, dadurch gekennzeichnet, daß der zylindrische Abschnitt (8) der Durchbrechung (3) zwischen dem düsenförmigen Einströmabschnitt (7) und dem diffusorartigen Abschnitt (9) der Durchbrechung (3) angeordnet ist.

19. Filter nach Anspruch 1 bis 11, dadurch gekennzeichnet, daß die Lagen (21) gewirkten Filtermediums zu formsteifen dünnen Platten (4) ausgebildet sind, die zur Bildung einer der Filterplatte (2) außenseitig in einem Rahmen (10) gehalten sind.

20. Filter nach Anspruch 19, dadurch gekennzeichnet, daß an dem Rahmen (10) in Durchströmrichtung X gerichtete Abstandshalter (11) ausgebildet sind.

21. Filter nach Anspruch 19 und 20, dadurch gekennzeichnet, daß jede Filterplatte (2) als Einschubteil für einen lösbaren Einschub in ein Filtergehäuse (12) ausgebildet ist.

## Claims

1. A filter with a flat filtering medium for retaining solid particles from gases, which may be provided with a cleaning material and in addition has apertures distributed in a patterned formation over the surface of the filter medium, whereby at least two layers (21) of the filter medium extend, due to spacers (22) arranged distanced apart from and generally parallel to each other, over the flow surface of the gas being cleaned, so that their apertures (3) are arranged offset from each other, characterised in that the apertures (3) are shaped so that the flow resistance of the layers (21) of filter medium in the filter is smaller than or equal to the flow resistance of the apertures (3) at the start of the filtering phase and that during the filtering phase the flow resistance of the filter medium constantly increases with respect to the resistance of the apertures as a result of the accumulation of dust so that the generally porous filter medium acts initially as a surface or depth filter and during the filtering phase to an increasing extent as a diverter filter.

2. A filter as claimed in claim 1, characterised in that the spacers (22) are packers made from the meshed filter medium.

3. A filter as claimed in claim 1, characterised in that the spacers (22) are packers made from synthetic material.

4. A filter as claimed in claim 1, characterised in that a non-admixing open-pored material is introduced to fill entirely or partially a hollow space (23) between the layers (21) of the filter medium to act as a spacer.

5. A filter as claimed in claims 2 to 4, characterised in that the spacers (22) join the respective adjacent layers (21) to each other.

6. A filter as claimed in claims 1 to 5, characterised in that the layers (21) of the filter medium are saturated with a cleaning agent, such as silicon oil or similar, to improve the performance of the filter.

7. A filter as claimed in claims 1 to 6, characterised in that the layers (21) of the filter medium are provided with modification means in the form of anti-bacterial and/or fungicidal agents.

8. A filter as claimed in claims 1 to 7, characterised in that at least one layer (21) of the filter medium is electrostatically charged.

9. A filter as claimed in claims 1 to 8, characterised in that the filter medium is made from vegetable or animal fibres or natural polymer fibres or synthetic polymer fibres or inorganic fibres or a mixture of these fibres.

10. A filter as claimed in claim 9, characterised in that the fibres are made from fleece, fleece material, paper, felt or mesh.

11. A filter as claimed in claims 9 and 10, characterised in that the fibres are meshed to form layers of fleece compound.

12. A filter as claimed in claims 1 to 8, characterised in that the filter medium consists of a porous material such as foam, sintered material or similar.

13. A filter as claimed in claim 1, characterised in that the apertures (3) have a diffuser-type cross section (5).

14. A filter as claimed in claim 1, characterised in that the in-flow portion (7) of the apertures (3) is nozzle-shaped.

15. A filter as claimed in claim 1, characterised in that the apertures (3) are nozzle-shaped (6).

16. A filter as claimed in claim 15, characterised in that a cylindrical section (8) adjoins the nozzle-shaped in-flow section (7) of the aperture (3).

17. A filter as claimed in claim 15, characterised in that a diffuser-type portion (9) of the aperture (3) adjoins the nozzle-shaped in-flow section (7).

18. A filter as claimed in claims 14 to 17, characterised in that the cylindrical portion (8) of the aperture (3) is arranged between the nozzle-shaped in-flow section (7) and the diffuser-type section (9) of the aperture (3).

19. A filter as claimed in claims 1 to 11, characterised in that the layers (21) of meshed filter medium are configured as thin rigid plates (4) which are retained from the outside in a frame (10) to form one of the filter plates (2).

20. A filter as claimed in claim 19, characterised in that directional spacers (11) are arranged on the frame (10) in the flow direction X.

21. A filter as claimed in claims 19 and 20, characterised in that each filter plate (2) is formed as an insertable part so that it may be detachably inserted in a filter housing (12).

## Revendications

1. Filtre comportant un moyen de filtration en plaque destiné à retenir des particules solides provenant d'un gaz et pouvant être équipé d'un agent mouillant, et présentant, en plus, des percements disposés en formant un réseau et répartis sur la surface du moyen de filtration, au moins deux couches (21) du moyen de filtration étant disposées, sur la surface d'arrivée du courant de gaz à purifier, à une certaine distance l'une de l'autre au moyen d'écarteurs (22), et d'une façon générale parallèlement l'une à l'autre
caractérisé en ce que
les percements (3) sont réalisés en leur donnant une forme telle que la résistance hydraulique des couches (21) du moyen de filtration du filtre soit, au début de la phase de séparation, inférieure ou égale à la résistance hydraulique des percements (3) et en ce qu'au cours de la phase de séparation, par suite des dépots de poussières, la résistance hydraulique des couches (21) du moyen de filtration du filtre augmente constamment par rapport à la résistance hydraulique des percements (3), de telle façon que le moyen de filtration, d'une façon générale, poreux, se comporte, au début, comme filtre agissant par sa surface extérieure ou comme filtre agissant en profondeur, et, au cours de la phase de séparation, se comporte progressivement comme un séparateur à chicanes.

2. Filtre suivant la revendication 1, caractérisé en ce que les écarteurs (22) sont formés par des surépaisseurs du moyen de filtration en tricot.

3. Filtre suivant la revendication 1, caractérisé en ce que les écarteurs (22) sont formés par des surépaisseurs de matériau en matière plastique.

4. Filtre suivant la revendication 1, caractérisé en ce qu'entre les couches (21) du moyen de filtration, un matériau à pores ouverts, ne s'encrassant pas, est installé comme écarteur en remplissant complêtement ou partiellement l'espace creux (23) situé entre les couches (21).

5. Filtre suivant les revendications 2 à 4, caractérisé en ce que les écarteurs (22) relient entre elles chacune des couches (21) placées en contact.

6. Filtre suivant les revendications 1 à 5, caractérisé en ce que les couches (21) du moyen de filtration sont imprégnées d'un agent mouillant, comme une huile silicone ou similaire, améliorant les rendements de filtration.

7. Filtre suivant les revendications 1 à 6 caractérisé en ce que les couches (21) du moyen de filtration sont munies d'un moyen modificateur antibactériel et/ou fongicide.

8. Filtre suivant les revendications 1 à 7, caractérisé en ce qu'au moins l'une des couches (21) est chargée électrostatiquement.

9. Filtre suivant les revendications 1 à 8, caractérisé en ce que le moyen de filtration est constitué de fibres végétales ou animales, ou de fibres polymères naturelles, ou de fibres polymères synthétiques, ou de fibres non organiques, ou d'un mélange de ces fibres.

10. Filtre suivant la revendication 9, caractérisé en ce que les fibres se présentent sous forme non tissée, sous forme de nappes non tissées, de papier, de feutre ou de tresses.

11. Filtre suivant la revendication 9 et la revendication 10, caractérisé en ce que les fibres sont tricotées pour former des couches composites de non-tissés.

12. Filtre suivant les revendications 1 à 8, caractérisé en ce que le moyen de filtration est constitué de matériau poreux, comme de la mousse, de la matériau fritté, ou similaire.

13. Filtre suivant la revendication 1, caractérisé en ce que les percements (3) présentent une section (5) formant diffuseur.

14. Filtre suivant la revendication 1, caractérisé en ce que la partie (7), située côté entrée de l'écoulement, des percements (3) est réalisée en forme de buse.

15. Filtre suivant la revendication 1, caractérisé en ce que les percements (3) sont réalisés en forme de buse (6).

16. Filtre suivant la revendication 15, caractérisé en ce qu'à la partie (7), située côté entrée de l'écoulement, se raccorde une partie cylindrique (8) du percement (3).

17. Filtre suivant la revendication 15, caractérisé en ce qu'à la partie (7), située côté entrée de l'écoulement, se raccorde une partie (9), formant diffuseur, du percement (3).

18. Filtre suivant les revendications 14 à 17, caractérisé en ce que la partie cylindrique (8) du percement (3) est disposée entre la partie (7), située côté entrée de l'écoulement, et la partie (9), formant diffuseur, du percement (3).

19. Filtre suivant les revendications 1 à 11, caractérisé en ce que les couches (21) de moyen de filtration en tricot sont réalisées pour constituer des plaques fines (4), rigides par leur forme, qui sont maintenues, du côté extérieur, dans un cadre (10), pour former l'une des plaques de filtration (2).

20. Filtre suivant la revendication 19, caractérisé en ce que, sur le cadre (10), sont réalisés des écarteurs (11) orientés suivant la direction X de l'écoulement.

21. Filtre suivant la revendication 19 et la revendication 20, caractérisé en ce que chaque plaque de filtration (2) est réalisée sous la forme d'une pièce embrochable, permettant être librement insérée dans un carter de filtre (12).
